# EUROPÄISCHE PATENTSCHRIFT

(11) **EP 3 969 405 B1**
(45) Veröffentlichungstag und Bekanntmachung des Hinweises auf die Patenterteilung: **10.07.2024**
(21) Anmeldenummer: 20712263.1
(22) Anmeldetag: 12.03.2020
(51) Int. Cl.: B66F 9/07, B64F 1/00

(54) **FLURFÖRDERZEUG**
INDUSTRIAL TRUCK
CHARIOT DE MANUTENTION

(30) Priorität: 14.05.2019 DE 102019112580
(43) Veröffentlichungstag der Anmeldung: 23.03.2022
(73) Patentinhaber: Hubtex Maschinenbau GmbH & Co. KG, 36041 Fulda (DE)
(72) Erfinder: KELLER, Jürgen, 36137 Großenlüder (DE)
(74) Vertreter: Kluin Patent
(86) Internationale Anmeldenummer: PCT/EP2020/056652
(87) Internationale Veröffentlichungsnummer: WO 2020/229019

(56) Entgegenhaltungen:
- EP-A1- 3 064 466
- WO-A1-2005/087648
- WO-A2-2015/074755
- US-A- 3 136 433

## Beschreibung

Die Erfindung betrifft ein Flurförderzeug mit einander gegenüberliegend angeordneten Hubmasten zum Anheben und Absenken einer sich zwischen diesen befindlichen Ladeplattform in einer Anhebe- und Absenkrichtung.

Die Erfindung betrifft insbesondere ein Flurförderzeug, das zum Transport von Luftfrachtsendungs-Paletten oder -Containern eingesetzt wird.

Ein derartiges Flurförderzeug ist unter der Bezeichnung "Xway Mover 7000" von der Firma DIMOS Maschinenbau GmbH bekannt. Bei diesem Flurförderzeug sind zum Anheben und Absenken vier Hubmasten bekannt, die jeweils mit einem Hydraulikzylinder ausgestattet sind. Sie werden separat voneinander mit Hydraulikflüssigkeit beaufschlagt.

Nachteilig bei diesem Fahrzeug ist, dass seine Herstellung aufwendig und die mit ihm maximal erzielbaren Hubhöhen nicht oder nur unter großem konstruktivem Aufwand an verschiedene Anfordernisse anpassbar ist.

Der Erfindung liegt daher die Aufgabe zugrunde, ein diesbezüglich verbessertes Flurförderzeug zu schaffen. WO 2015/074755 A2 offenbart ein Flurförderzeug mit einander gegenüberliegend angeordneten Hubmasten zum Anheben und Absenken einer sich zwischen diesen befindlichen Tragvorrichtung in einer Anhebe- und Absenkrichtung (Z), wobei jeder der Hubmasten zwei in Anhebe- und Absenkrichtung (Z) voneinander beabstandete Scheiben umfasst, die von einem flexiblen Zugmittel umlaufen werden, wobei zumindest eine der Scheiben mittels einer Antriebseinrichtung drehantreibbar ist.

Diese Aufgabe wird durch das in Anspruch 1 wiedergegebene Flurförderzeug gelöst.

Bei dem erfindungsgemäßen Flurförderzeug umfasst jeder der Hubmasten zwei in Anhebe- und Absenkrichtung voneinander beabstandete Scheiben, die von einem flexiblem Zugmittel umlaufen werden, wobei zumindest eine der Scheiben mittels einer Antriebseinrichtung drehantreibbar ist. Diese Anordnung ersetzt zumindest einen der bei dem zum Stand der Technik gehörenden Fahrzeug vorgesehenen Hubzylinder. Sie ist deutlich kostengünstiger herstellbar. Auch kann - wie bevorzugt - die Antriebseinrichtung einen Elektromotor umfassen, sodass aufwendige Verrohrungen und Hydraulikpumpen vollständig entfallen können, wodurch der Herstellungsaufwand des erfindungsgemäßen Flurförderzeugs abermals reduziert ist.

Erfindungsgemäß ist zumindest eine der beiden Scheiben eines jeden Hubmastes in einem Lagerbock gelagert, der in einer Spannrichtung verlagerbar in einer Lagerbockaufnahme des jeweiligen Hubmastes angeordnet ist. Auf diese Weise kann die für einen störungsfreien Betrieb erforderliche Spannung des flexiblen Zugmittels auf einfache Weise eingestellt werden. Auch ist es aufgrund dieser Maßnahme im Bedarfsfalle leicht möglich, das flexible Zugmittel zu entspannen, was beispielsweise für einen Austausch erforderlich sein kann.

Vorzugsweise sind die voneinander beabstandeten Scheiben derart angeordnet, dass das flexible Zugmittel zwei sich in Anhebe- und Absenkrichtung erstreckende Trume umfasst. Die Ladeplattform muss zum Anheben und Absenken dann lediglich mit einem der Trume mechanisch verbunden sein.

Besonders bevorzugt ist es, wenn die Ladeplattform mit zwei gleichlaufenden Trumen der flexiblen Zugmittel der beiden Hubmasten verbunden ist. Auf diese Weise kann einerseits die Last, zu deren Anheben das erfindungsgemäße Flurförderzeug geeignet ist, erhöht werden. Andererseits wird durch diese Maßnahme die Betriebssicherheit des erfindungsgemäßen Flurförderzeugs erhöht, da im Falle eines Versagens eines der beiden flexiblen Zugmittel, beispielsweise durch Abriss, ein unkontrolliertes Absenken der Ladeplattform verhindert werden kann.

Besonders bevorzugt ist eine Weiterbildung des erfindungsgemäßen Flurförderzeugs, bei welcher zumindest eine der unteren Scheiben der beiden Hubmasten drehfest mit der Antriebswelle einer Antriebseinrichtung verbunden ist und die beiden unteren Scheiben der beiden Hubmasten über eine Verbindungswelle mechanisch miteinander verbunden sind. Aufgrund dieser Maßnahme wird ein Gleichlauf der beiden flexiblen Zugmittel der beiden Hubmasten sichergestellt. Auch ist es aufgrund dieser Maßnahme grundsätzlich möglich, lediglich eine einzige Antriebseinrichtung vorzusehen.

Bevorzugt ist es jedoch, beide unteren Scheiben der beiden Hubmasten jeweils mit der Antriebswelle einer separaten Antriebseinrichtung drehfest zu verbinden. Durch diese Maßnahme lässt sich einerseits die erreichbare Hebeleistung erhöhen. Andererseits ist wiederum die Betriebssicherheit des erfindungsgemäßen Flurförderzeugs erhöht, da selbst beim Ausfall einer Antriebseinrichtung die Ladeplattform - wenn auch mit verminderter Leistung - angehoben und abgesenkt werden kann.

Das flexible Zugmittel kann in vielfältiger Weise ausgebildet sein, beispielsweise als Kette, Zahnriemen, Rippenriemen, Keilriemen etc. Die Scheiben sind an die jeweilige Ausbildung des flexiblen Zugmittels angepasst.

Bei einer besonders bevorzugten Ausführungsform des erfindungsgemäßen Flurförderzeugs weist jedes flexible Zugmittel zwei parallel verlaufende Keilriemen auf und die Scheiben sind demgemäß als Doppelriemenscheiben ausgebildet. Die Verwendung von zwei parallelen Keilriemen erhöht abermals die Betriebssicherheit des erfindungsgemäßen Flurförderzeugs.

Besonders bevorzugt ist darüber hinaus eine Weiterbildung des erfindungsgemäßen Flurförderzeugs, bei welcher jeder der Hubmasten einen ersten Hauptrahmen umfasst, an dem wahlweise zumindest ein zweiter Hauptrahmen anbringbar ist. Bei dieser Weiterbildung sind die Hubmasten mit anderen Worten modular ausgebildet, wobei jedes Modul einen Hauptrahmen umfasst. Zur Veränderung der Länge des Hubmastes und damit verbunden der Veränderung der maximal erreichbaren Hubhöhe muss lediglich ein Hauptrahmen ergänzt werden. Sind bereits mehrere Hauptrahmen miteinander verbunden und soll die Länge des Hubmastes verringert werden, so muss leidglich einer der Hauptrahmen entfernt werden. Das zuvor verwendete flexible Zugmittel muss jeweils durch eines mit angepasster Länge ausgetauscht werden. Aufgrund dieser Weiterbildung des erfindungsgemäßen Flurförderzeugs ist es auch möglich, mit einer bestimmten, maximalen Hubhöhe ausgelieferte Flurförderzeuge zu einem späteren Zeitpunkt an durch hinsichtlich der gewünschten Hubhöhe geänderte Anforderungen auf einfache Weise anzupassen.

Die Anbringbarkeit eines zweiten Hauptrahmens an einem ersten Hauptrahmen ist besonders einfach, wenn - wie bevorzugt - der erste Hauptrahmen eine obere Querstrebe und der untere Hauptrahmen eine untere Querstrebe aufweist, wobei die untere Querstrebe an der oberen Querstrebe befestigbar ausgebildet sind.

Besonders bevorzugt ist des Weiteren eine Ausführungsform des erfindungsgemäßen Flurförderzeugs, bei welcher es Lenkmotoren und Fahrantriebe umfasst, die ebenfalls elektrisch betreibbar ausgebildet sind. Diese Weiterbildung des erfindungsgemäßen Flurförderzeugs zeichnet sich abermals durch einen besonders geringen Herstellungsaufwand aus, da der Betrieb des Fahrzeugs nur einer einzigen Energiequelle - einem elektrischen Stromspeicher - möglich ist.

Die Erfindung soll anhand der beigefügten Zeichnungen weiter erläutert werden. Es zeigen schematisch:
- Fig. 1: ein Ausführungsbeispiel eines erfindungsgemäßen Flurförderzeugs in einer ersten perspektivischen Ansicht;

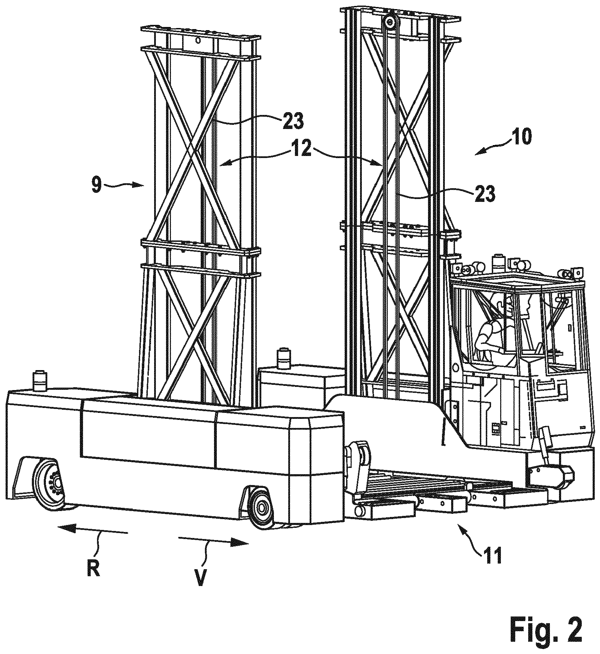

- Fig. 2: dasselbe Ausführungsbeispiel in einer zweiten perspektivischen Ansicht;

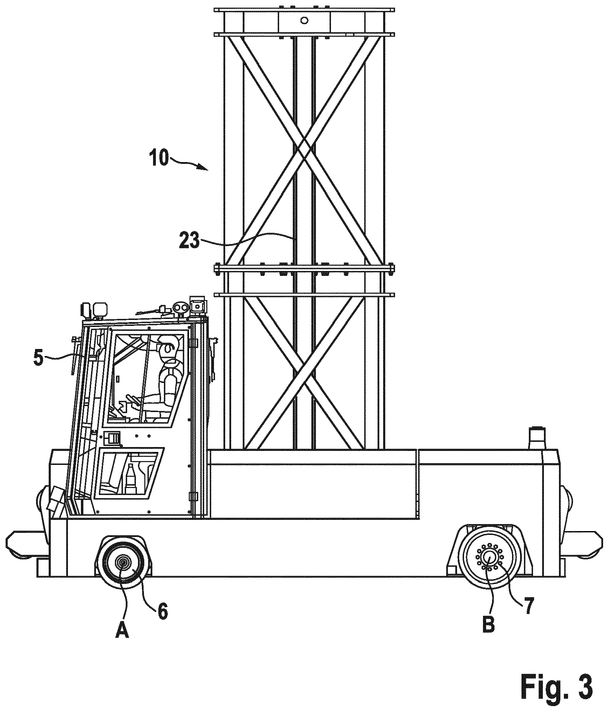

- Fig. 3: dasselbe Ausführungsbeispiel in einer Seitenansicht;

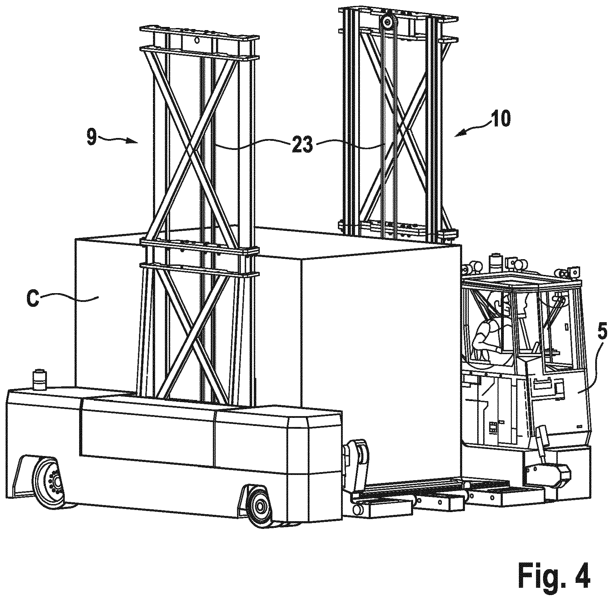

- Fig. 4: dasselbe Ausführungsbeispiel in einer Fig. 2 entsprechenden Ansicht, jedoch mit einem Transportcontainer beladen;
- Fig. 5: dasselbe Ausführungsbeispiel in einer Ansicht von unten;

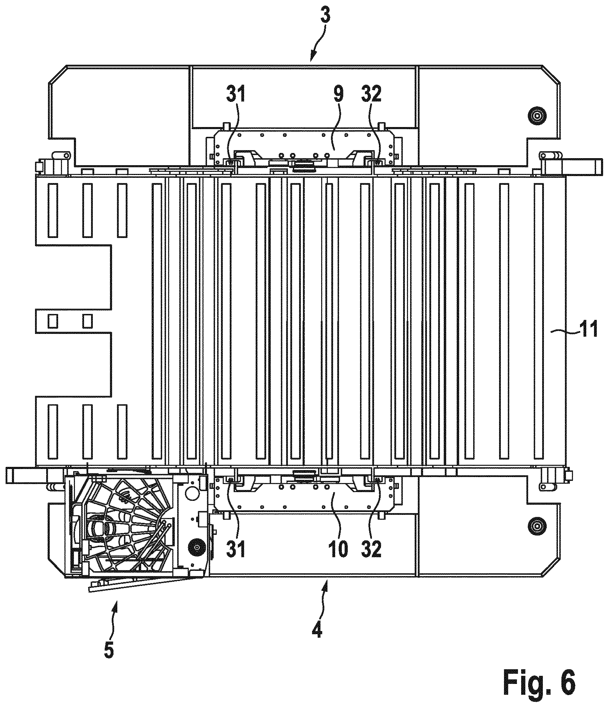

- Fig. 6: dasselbe Ausführungsbeispiel in einer Ansicht von oben;
- Fig. 7: eine Teilansicht desselben Ausführungsbeispiels in einer Ansicht gemäß Fig. 1 von hinten;
- Fig. 8: eine perspektivische Rückansicht eines ersten Ausführungsbeispiels eines der beiden Hubmasten des erfindungsgemäßen Flurförderzeugs;
- Fig. 9: eine perspektivische Vorderansicht des in Fig. 8 dargestellten Hubmastes;
- Fig. 10: eine Frontalansicht der Vorderseite desselben Hubmastes;
- Fig. 11: eine Ansicht desselben Hubmastes von oben;
- Fig. 12: eine Detailansicht einer Antriebseinrichtung dieses Hubmastes;
- Fig. 13: ein mittels der Antriebseinrichtung drehangetriebenes, mit einem flexiblen Zugmittel zusammenwirkendes Maschinenelement;
- Fig. 14: eine perspektivische Rückansicht eines zweiten Ausführungsbeispiels eines Hubmastes;
- Fig. 15: eine Draufsicht auf die Vorderseite desselben Hubmastes;
- Fig. 16: eine perspektivische Vorderansicht desselben Hubmastes;
- Fig. 17: eine perspektivische Ausschnittsdarstellung des oberen Bereichs eines Hubmastes sowie
- Fig. 18: eine Ausschnittsdarstellung des mittleren Bereichs des in Fig. 14 bis 16 dargestellten Ausführungsbeispiels des Hubmastes.

Das in der Zeichnung dargestellte Ausführungsbeispiel eines erfindungsgemäßen Flurförderzeugs (nachfolgend kurz "Flurförderzeug 100") umfasst ein Fahrgestell 1 mit einem Ladebereich 2, der von Seitenbereichen 3, 4 begrenzt ist. In den beiden Seitenbereichen 3 und 4 sind in der Zeichnung nicht erkennbare Komponenten untergebracht, die im Betrieb des Flurförderzeugs erforderlich sind, beispielsweise Energiespeicher wie Kraftstofftanks und Akkumulatoren, Antriebseinrichtungen für Fahr- und Hebefunktionen, elektrische und hydraulische Schaltungen zum Regeln oder Steuern der Antriebs- und Hebeleistungen sowie zum Lenken des Flurförderzeugs, etc.

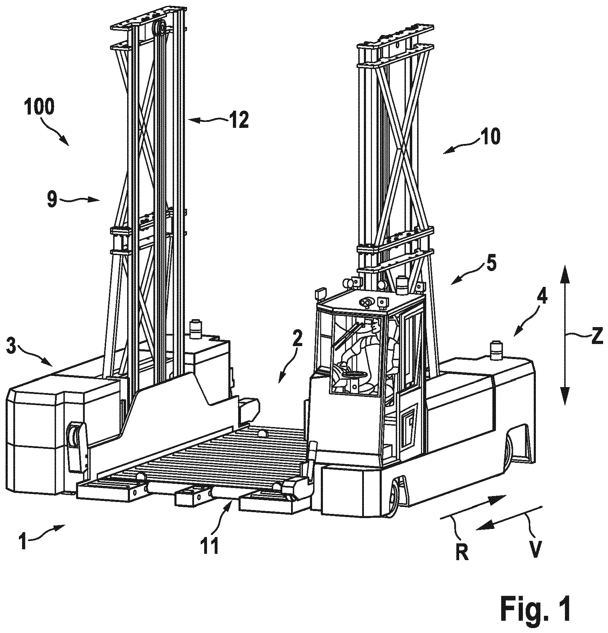

In Fig. 1 sind die Vorwärts- und Rückwärtsfahrtrichtungen V, R mit dem Pfeilen V, R symbolisiert.

An dem vorderen Bereich des in Vorwärtsfahrtrichtung V gesehenen linken Seitenbereichs 4 ist eine Fahrerkabine 5 angeordnet. Sie umfasst die zum Betrieb des Flurförderzeugs 100 benötigten Betätigungsmittel wie Tasten, Schalter, Joysticks und Lenkrad.

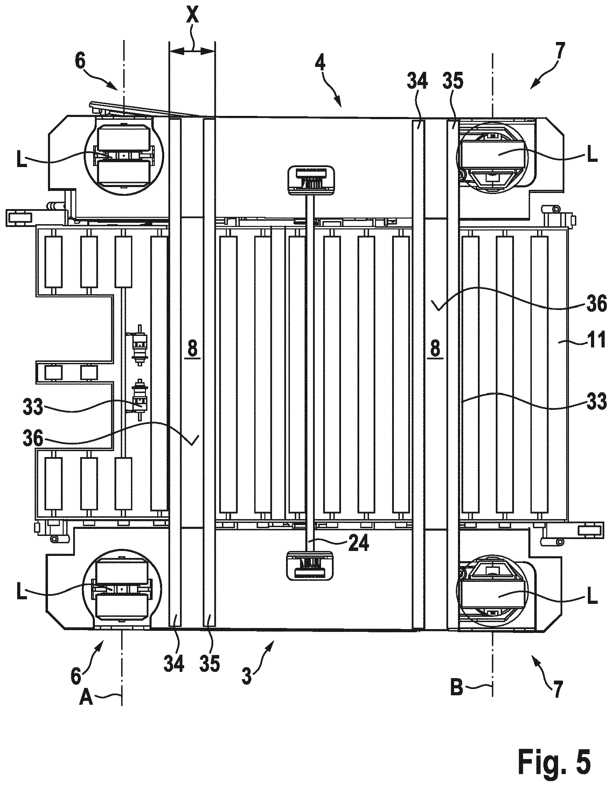

Wie insbesondere in Fig. 5 erkennbar ist, weist das Flurförderzeug 100 vier Räder auf, wobei die der Vorderachse A zugeordneten Vorderräder 6 als Zwillingsräder und die der Hinterachse B zugeordneten Hinterräder 7 als Einzelräder ausgebildet sind. Sämtliche der vier Räder sind lenkbar derart ausgebildet, dass sie um ihre jeweilige Lenkachse L um 360° drehbar sind. Jedes der Räder ist mit einem eigenen, in der Zeichnung nicht erkennbaren Lenkmotor verbunden. Alle Lenkmotoren sind vorzugsweise als Elektromotoren ausgebildet und werden über einen Lenkcomputer angesteuert, sodass das Flurförderzeug 100 Fahrtrichtungsänderungen in beliebiger Folge ohne Anhalten vollziehen kann. Somit kann eine Be- oder Entladungsstation direkt ohne aufwendiges Rangieren angefahren werden.

Zumindest eines der Vorderräder 6 und Hinterräder 7 ist mit einem Fahrantrieb gekoppelt. Zur Verbesserung der Traktion sind vorzugsweise sämtliche Vorderräder 6 und Hinterräder 7 mit jeweils einem Fahrantrieb gekoppelt. Der oder die Fahrantriebe können - wie auch die Lenkmotoren -Elektromotoren umfassen.

Wie in Fig. 5 erkennbar ist, weist das Fahrgestell 1 zwei sich parallel zueinander erstreckende, zwischen der Vorderachse A und der Hinterachse B angeordnete Querträger 8 auf. Sie verbinden die Seitenbereiche 3 und 4. Die Querträger 8 sind bodennah angeordnet und weisen eine im Vergleich zur Quererstreckung X vergleichsweise geringe Bauhöhe Y auf, sodass mit dem Flurförderzeug eine nur geringe Be- und Entladehöhe H realisierbar ist, wie nachfolgend noch genauer erläutert wird.

Von dem Fahrgestell 1 erstrecken sich nach oben zwei Hubmasten 9, 10. Ihre einander zugewandten Seiten sind zumindest nahezu bündig miteinander zugewandten Seiten der Seitenbereiche 3, 4 angeordnet.

Die beiden Hubmasten 9, 10 dienen dem Anheben und Absenken einer Ladeplattform 11 in einer Anhebe- und Absenkvorrichtung Z. Sie dient dem Tragen einer Last, bspw. einem Container C'. Hierzu weist jeder Hubmast 9, 10 ein flexibles Zugmittel 12 auf, welches eine untere Scheibe 13 und eine obere Scheibe 14 umläuft. Bei dem dargestellten Ausführungsbeispiel umfasst das flexible Zugmittel 12 zwei parallel zueinander verlaufende Keilriemen. Sie sind zwischen den als Doppelriemenscheiben ausgebildeten unteren und oberen Scheiben 13, 14 gespannt. Während die obere Scheibe 14 in einem feststehenden Lagerbock 15 um eine Achse 16 frei drehbar gelagert ist, ist die untere Scheibe 13 drehfest mit der Antriebswelle 17 einer Antriebseinrichtung 18 verbunden. Die Antriebseinrichtung 18 umfasst vorzugsweise ebenfalls einen Elektromotor.

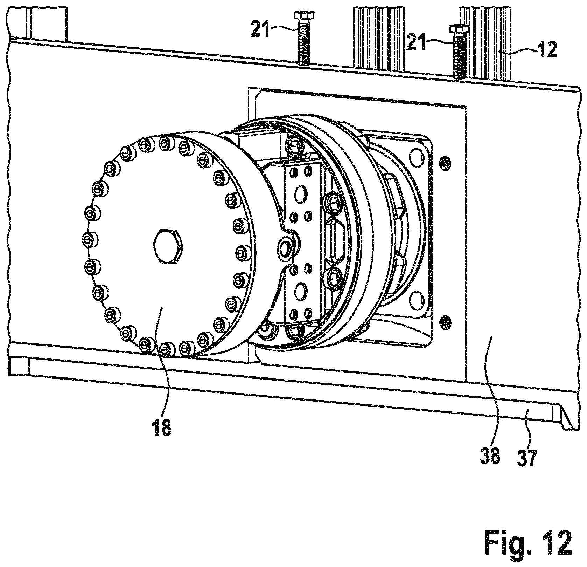

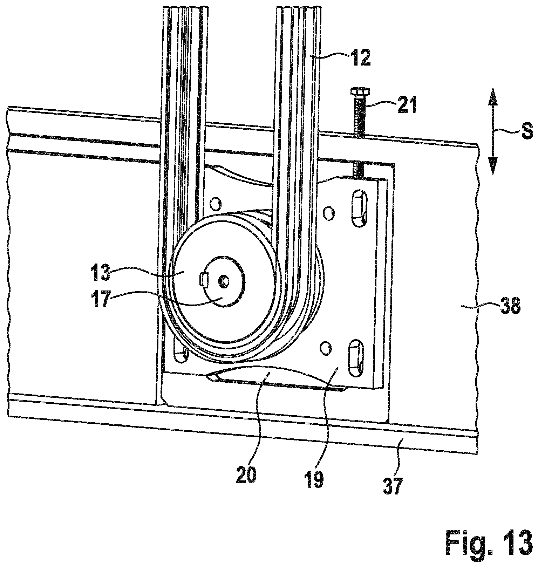

Die Antriebseinrichtung 18 ist an einem Lagerbock 19 gelagert, welcher an dem Hubmast 9, 10 zum Zwecke der Einstellung der Spannung des flexiblen Zugmittels 12 verlagerbar angeordnet ist (siehe insbesondere Fig. 12 und 13). Hierzu weisen die Hubmasten 9, 10 jeweils eine Lagerbockaufnahme 20 auf, die in Spannrichtung S eine größere Ausdehnung hat als der Lagerbock 19. Gemäß Fig. 12 und 13 von oben münden in die Lagerbockaufnahme 20 zwei Gewindebohrungen, in die jeweils eine Spannschraube 21 eingedreht ist. Das in Eindrehrichtung vordere Ende jeder der Spannschrauben 21 stützt sich auf einer Fläche des Lagerbocks 19 ab. Wie aus den Fig. 12 und 13 sinnfällig wird, kann die Spannung des flexiblen Zugmittels 12 durch ein Ein- und Ausdrehen der Spannschrauben 21 verändert werden.

Das flexible Zugmittel 12 weist aufgrund des Umlaufs um die unteren und oberen Scheiben 13, 14 zwei zueinander parallel verlaufende Trume 22, 23 auf. Damit die flexiblen Zugmittel 12 der beiden Hubmasten 9, 10 mit exakt derselben Geschwindigkeit umlaufen, sind die Antriebswellen 17 der beiden Antriebseinrichtungen 18 der Hubmasten 9, 10 vorzugsweise über eine Verbindungswelle 24 mechanisch miteinander verbunden (siehe Fig. 5). Durch Vorsehen einer Verbindungswelle 24 ist es grundsätzlich auch möglich, lediglich einen einzigen Antriebsmotor 18 für die flexiblen Zugmittel 12 der beiden Hubmasten 9, 10 vorzusehen.

Zum Zwecke des Anhebens und Absenkens ist die Ladeplattform 11 mit einem der beiden bei Betätigung der Antriebseinrichtungen 18 gleichsinnig verlaufenden Trume 22, 23 der beiden flexiblen Zugmittel 12 der Hubmasten 9, 10 verbunden, beispielsweise jeweils mit dem Trum 23.

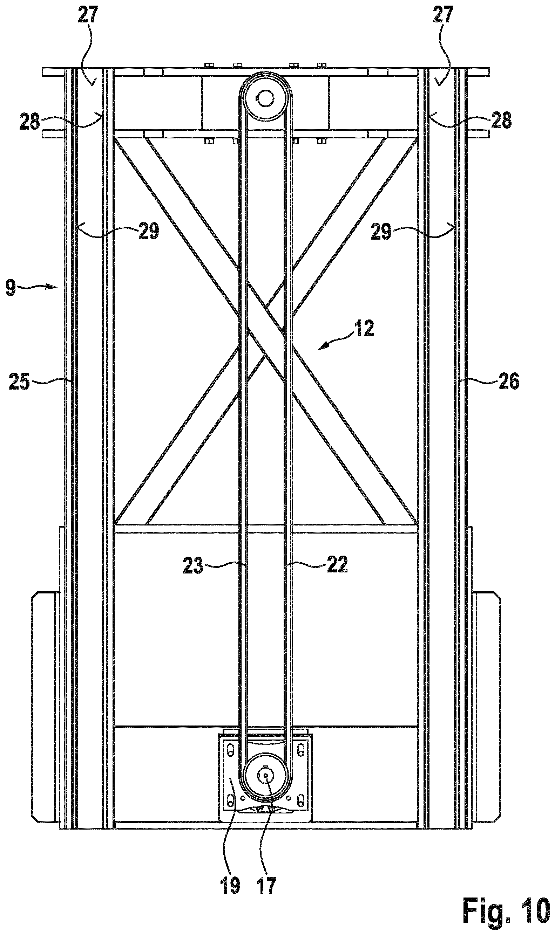

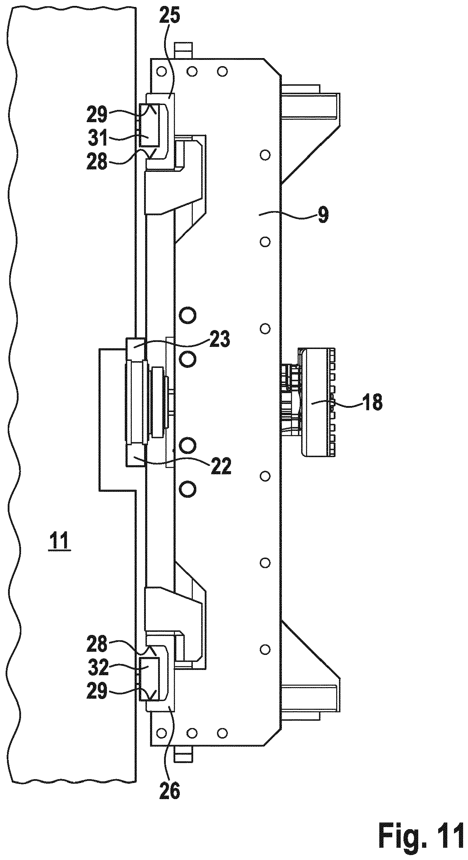

Zur Führung der Ladeplattform 11 an den Hubmasten 9, 10 sind an den Hubmasten 9, 10 - wie insbesondere in Fig. 10 und 11 am Beispiel des Hubmasts 9 erkennbar - Führungsprofile 25, 26 vorgesehen. Jedes Führungsprofil 25, 26 hat einen Innenquerschnitt, der etwa C-förmig ausgebildet ist. Er weist eine Basisfläche 27 und zwei zueinander parallele, sich senkrecht von der Basisfläche zur offenen Profilseite 30 hin erstreckende Seitenflächen 28, 29 auf.

Die Führungsprofile 25, 26 sind derart an dem jeweiligen Hubmast 9, 10 angeordnet, dass ihre offenen Profilseiten 30 einander zugewandt sind.

Wie in Fig. 11 erkennbar ist, weist die Ladeplattform 11 auf ihrer dem dort dargestellten Hubmast 9 zugewandten Seite zwei Führungsrollen 31, 32 auf, die in dem dargestellten Ausführungsbeispiel jeweils an einer der beiden äußeren Seitenflächen 29 der Führungsprofile 25, 26 abrollen und somit die Führungsplattform 11 gegen Verlagerungen relativ zum Hubmast 9 in V-R-Richtung des Flurförderzeugs führen. Es versteht sich, dass die Ladeplattform 11 auch an der in Fig. 11 nicht dargestellten, dem anderen Hubmast 10 zugewandten Seite entsprechen ausgebildet ist. Auch der Hubmast 10 weist Führungsprofile 25, 26 auf. Schließlich sei darauf hingewiesen, dass die Führungsrollen 31, 32 auch derart angeordnet sein können, dass sie beide an den mittleren Seitenflächen 28 der Führungsprofile 25, 26 abrollen. Darüber hinaus können in Längsrichtung der Führungsprofile 25, 26 zu den Führungsrollen 31, 32 versetzt weitere, in der Zeichnung nicht dargestellte Führungsrollen vorgesehen sein, die dann wiederum an einer der Seitenflächen 28 oder 29 abrollen. Aufgrund dieser Maßnahme kann die Ladeplattform mithilfe der Führungsprofile 25, 26 auch gegen ein Verkippen in eine senkrecht zur Zeichenebene der Fig. 10 verlaufenden Achse gesichert werden.

Ein wesentlicher Vorteil der Ausbildung und Anordnung der Führungsprofile 25, 26 sowie der in ihnen abrollenden Führungsrollen 31, 32 besteht darin, dass auf die Ladeplattform 11 in V-R-Richtung wirkende Kräfte, wie sie insbesondere beim Be- und Entladen auftreten können, direkt von den beiden Hubmasten 9, 10 aufgenommen werden und es hierzu keinen weiteren, möglicherweise technisch aufwendigen Maßnahmen bedarf.

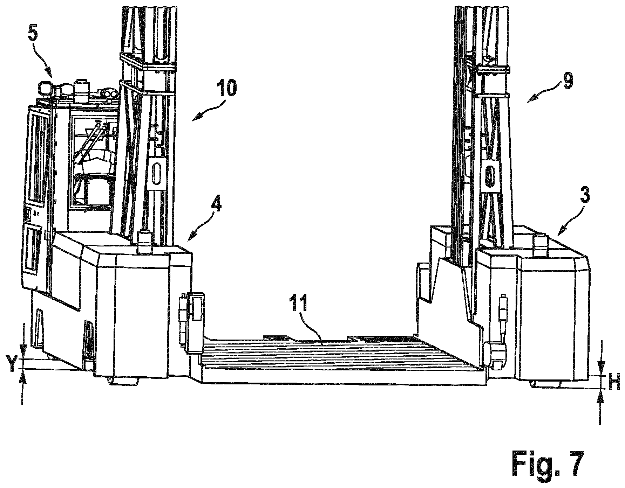

Wie bereits weiter oben erwähnt, weist das Flurförderzeug 100 eine besonderes niedrige Be- und Entladehöhe H auf. Diese ist - wie in Fig. 7 erkennbar - vorderachs- und hinterachsseitig im Wesentlichen identisch. Dies wird durch die Ausbildung des Fahrgestells 1 mit den Querträgern 8 im Unterschied zu der bekannten U-förmigen Ausbildung des Fahrgestells mit einem einzigen, hinteren Querträger bewirkt, der zum Erzielen der erforderlichen Fahrgestell-Steifigkeit im Querschnitt erheblich voluminöser ausgebildet werden muss als die beiden, in Längserstreckung des Flurförderzeugs 100 voneinander beabstandeten Querträger 8. Um die Be- und Entladehöhe H minimieren zu können, weist die Ladeplattform 11 an der Unterseite Aussparungen 33 für jeweils einen der Querträger 8 auf, sodass die Be- und Entladehöhe H die vertikale Erstreckung der Querträger 8 vom Untergrund nur geringfügig übersteigt.

Jeder der Querträger 8 kann zwei parallel zueinander verlaufende Streben 34, 35 umfassen, die einen rechteckigen, vorzugsweise quadratischen Querschnitt aufweisen. Die Streben 34, 35 sind mittels einer Verbindungsplatte 36 miteinander verbunden.

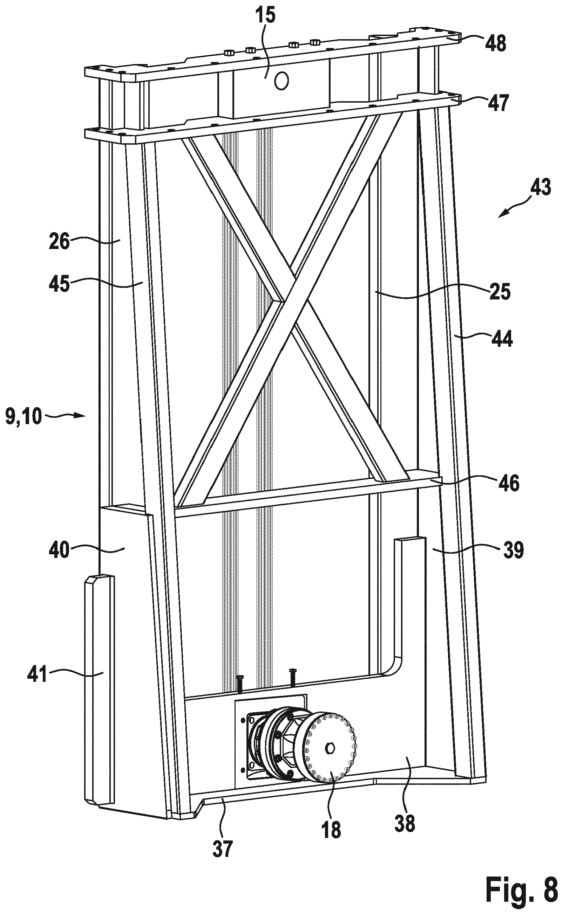

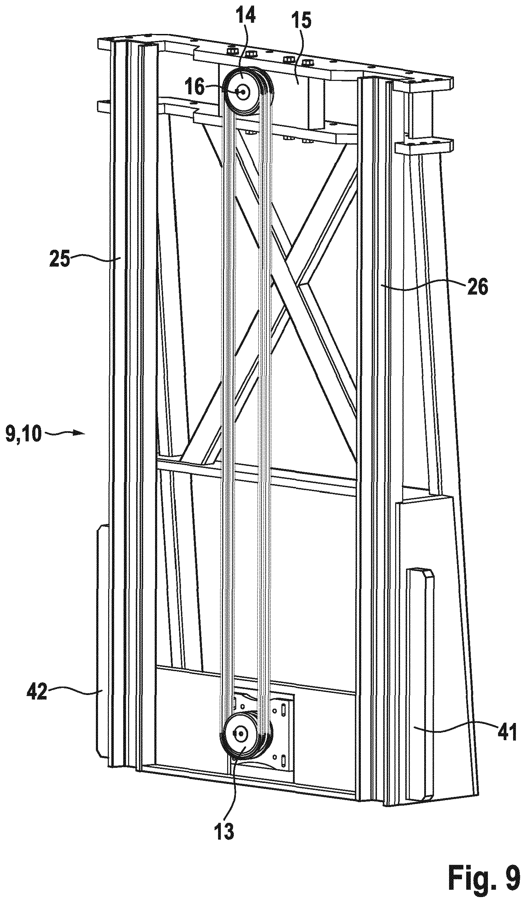

Wie beispielsweise in den Figuren 8 und 9 erkennbar ist, weisen die Hubmasten 9, 10 jeweils eine Bodenplatte 37 auf, von der sich ein unteres Rahmenbauteil 38, welches die Lagerbockaufnahme 20 umfasst, nach oben erstreckt. Das untere Rahmenbauteil 38 ist von der Vorder- bzw. der Rückseite des Hubmastes 9, 10 betrachtet etwa U-förmig ausgebildet. An den Außenseiten seiner beiden Schenkel liegen Seitenwandungen 39, 40 des Hubmastes an, die mit seitlichen Versteifungsrippen 41, 42 versehen sind. Von der Bodenplatte 37 nach oben erstreckt sich ein erster Hauptrahmen 43, der seitliche Profile 44, 45 umfasst, die über Querstreben 46, 47, 48 miteinander verbunden sind. Zwischen der unteren Querstrebe 46 und der mittleren Querstrebe 48 erstrecken sich X-artig angeordnete Diagonalverstrebungen 49, 50. An der Bodenplatte 37, den Seitenwandungen 39, 40 und den Querstreben 46, 47, 48 sind die Führungsprofile 25, 26 befestigt. Der so aufgebaute Hubmast zeichnet sich durch eine erhebliche Verwindungsteifheit bei gleichzeitig geringem Gewicht und geringem Fertigungsaufwand aus.

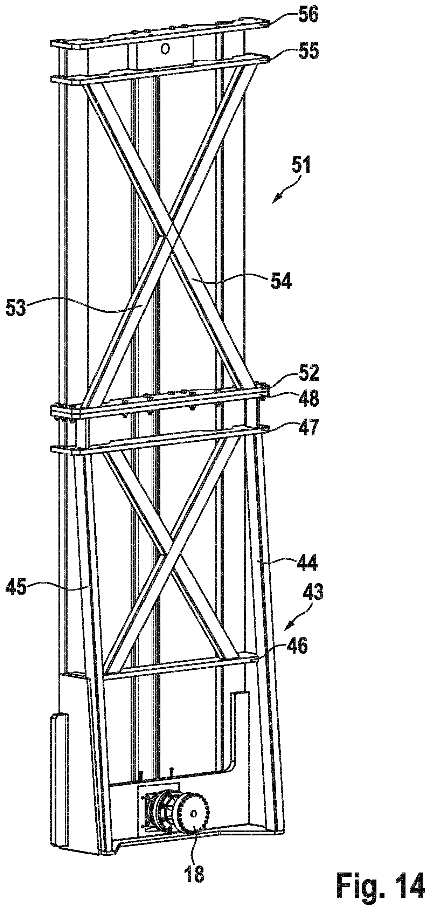

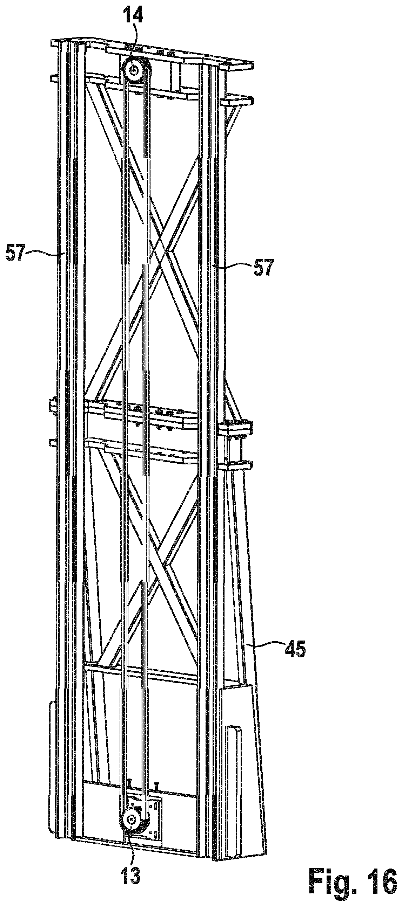

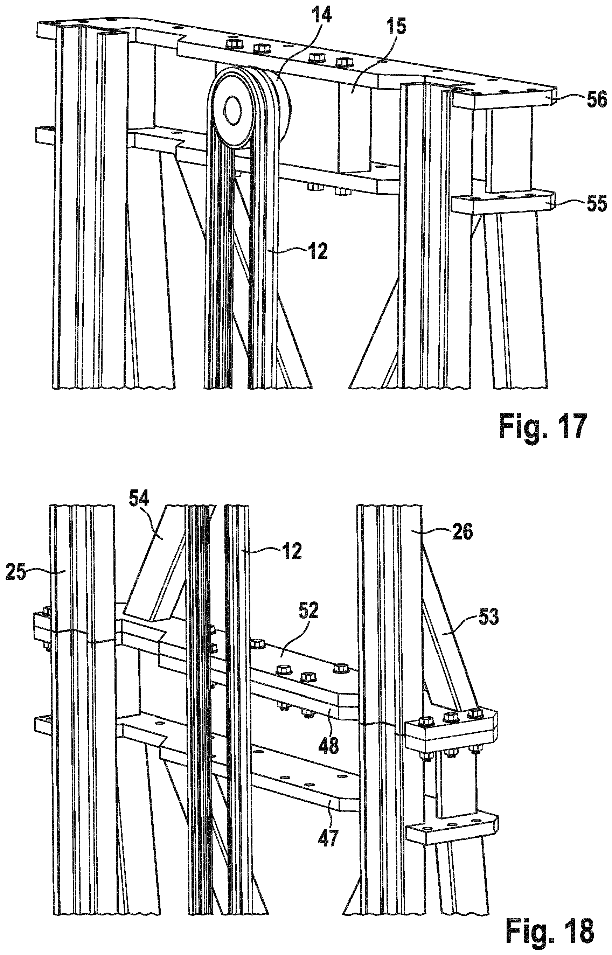

Bei dem in Fig. 8, 9 und 10 dargestellten Ausführungsbeispiel des Hubmastes ist zwischen der mittleren Querstrebe 47 und der oberen Querstrebe 48 der obere Lagerbock 15 angeordnet. Wie durch Vergleich mit dem in Fig. 14 bis 18 dargestellten, weiteren Ausführungsbeispiel eines Hubmastes 9, 10 erkennbar ist, fehlt bei diesem weiteren Ausführungsbeispiel der Lagerbock 15 zwischen den Querstreben 47 und 48. Stattdessen erstreckt sich von der oberen Querstrebe 48 nach oben ein zweiter Hauptrahmen 51. Er weist eine untere Querstrebe 52 auf, die mit der oberen Querstrebe 48 des ersten Hauptrahmens 43 verschraubt ist. Über Diagonalverstrebungen 53, 54 ist eine mittlere Querstrebe 55 mit der Querstrebe 52 verbunden. Zwischen dieser und einer oberen Querstrebe 56 ist der Lagerbock 15 angeordnet. Die Führungsprofile 25, 26 erstrecken sich von der Bodenplatte 37 bis zur Querstrebe 56, die Führungsprofile 25, 26 sind bei dem in Fig. 14 bis 18 gezeigten Hubmast bspw. Durch Ergänzung von Führungsprofilabschnitten 57 länger als bei dem in Fig. 8 bis 10 dargestellten ausgebildet. Dementsprechend weist auch das flexible Zugmittel 12 bei den in Fig. 14 bis 18 gezeigten Ausführungsbeispielen eine größere Länge als bei den in Fig. 8 bis 10 dargestellten auf.

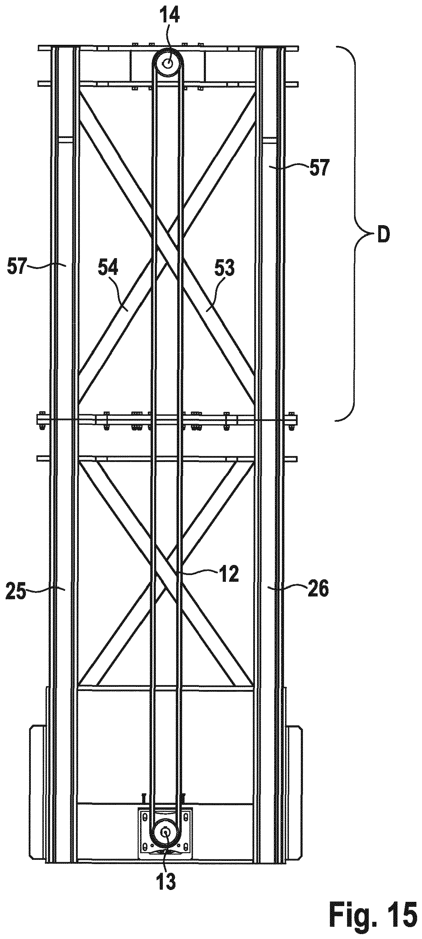

Aus den vorstehenden Erläuterungen wird ersichtlich, dass es aufgrund des modularen Aufbaus des Hubmastes mit einer variablen Anzahl von Diagonalverstrebungen und Querstreben möglich ist, auf einfache Weise Hubmasten unterschiedlicher Längen bereitzustellen, die an Anwenderanforderungen angepasst sind. Ferner ist ersichtlich, dass aufgrund dieses modularen Aufbaus bereits existierende, entsprechende Hubmasten aufweisende Flurförderzeuge mit nur geringem Aufwand hinsichtlich der mit ihnen erzielbaren, maximalen Hubhöhe an sich ändernde Anforderungen angepasst werden können. Hierzu sind lediglich Segmente, wie in Fig. 15 mit D bezeichnet, samt zugehöriger Führungsprofilabschnitte 57 des jeweiligen Hubmastes 9, 10 zu entfernen oder zu ergänzen, sowie das flexible Zugmittel 12 durch ein solches mit geeigneter Länge auszutauschen.

### Bezugszeichenliste:

- 100: Flurförderzeug
- 1: Fahrgestell
- 2: Ladebereich
- 3: Seitenbereich
- 4: Seitenbereich
- 5: Fahrerkabine
- 6: Vorderräder
- 7: Hinterräder
- 8: Querträger
- 9: Hubmast
- 10: Hubmast
- 11: Ladeplattform
- 12: flexibles Zugmittel
- 13: untere Doppelriemenscheibe
- 14: oberen Doppelriemenscheibe
- 15: Lagerbock
- 16: Achse
- 17: Antriebswelle
- 18: Antriebseinrichtung
- 19: Lagerbock
- 20: Lagerbockaufnahme
- 21: Spannschraube
- 22: Trum
- 23: Trum
- 24: Verbindungswelle
- 25: Führungsprofil
- 26: Führungsprofil
- 27: Basisfläche
- 28: Seitenfläche
- 29: Seitenfläche
- 30: offene Seite
- 31: Führungsrolle
- 32: Führungsrolle
- 33: Aussparungen
- 34: Strebe
- 35: Strebe
- 36: Verbindungsplatte
- 37: Bodenplatte
- 38: Rahmenbauteil
- 39: Seitenwandung
- 40: Seitenwandung
- 41: Versteifungsrippe
- 42: Versteifungsrippe
- 43: Hauptrahmen
- 44: Profil
- 45: Profil
- 46: Querstrebe
- 47: Querstrebe
- 48: Querstrebe
- 49: Diagonalverstrebung
- 50: Diagonalverstrebung
- 51: weiterer Hauptrahmen
- 52: Querstrebe
- 53: Diagonalverstrebung
- 54: Diagonalverstrebung
- 55: Querstrebe
- 56: Querstrebe
- 57: Führungsprofilabschnitt

- A: Vorderachse
- B: Hinterachse
- C': Container
- D: Segment
- H: Be- und Entladehöhe
- L: Lenkachsen
- R: Rückwärtsfahrtrichtung
- S: Spannrichtung
- V: Vorwärtsfahrtrichtung
- X: Quererstreckung
- Y: Bauhöhe
- Z: Anhebe- und Absenkrichtung

## Patentansprüche

1. Flurförderzeug (100),
mit einander gegenüberliegend angeordneten Hubmasten (9, 10) zum Anheben und Absenken einer sich zwischen diesen befindlichen Ladeplattform (11) in einer Anhebe- und Absenkrichtung (Z),
wobei jeder der Hubmasten (9, 10) zwei in Anhebe- und Absenkrichtung (Z) voneinander beabstandete Scheiben (13, 14) umfasst, die von einem flexiblen Zugmittel (12) umlaufen werden, wobei zumindest eine der Scheiben (13, 14) mittels einer Antriebseinrichtung (18) drehantreibbar ist,
wobei zumindest eine der beiden Scheiben (13, 14) eines jeden Hubmastes (9, 10) in einem Lagerbock (19) gelagert ist, der in einer Spannrichtung (S) verlagerbar in einer Lagerbockaufnahme (20) des jeweiligen Hubmastes (9, 10) angeordnet ist.

2. Flurförderzeug nach Anspruch 1, **dadurch gekennzeichnet, dass** das flexible Zugmittel (12) zwei sich in Anhebe- und Absenkrichtung erstreckende Trume (22, 23) umfasst.

3. Flurförderzeug nach Anspruch 2, **dadurch gekennzeichnet, dass** die Ladeplattform (11) mit zwei gleichlaufenden Trumen (23) der flexiblen Zugmittel (12) der beiden Hubmasten (9, 10) verbunden ist.

4. Flurförderzeug nach einem der Ansprüche 1 bis 3, **dadurch gekennzeichnet, dass** zumindest eine der unteren Scheiben (13) der beiden Hubmasten (9, 10) drehfest mit der Antriebswelle (17) einer Antriebseinrichtung (18) verbunden ist und die beiden unteren Scheiben (13) der beiden Hubmasten (9, 10) über eine Verbindungswelle (24) mechanisch miteinander verbunden sind.

5. Flurförderzeug nach Anspruch 4, **dadurch gekennzeichnet, dass** beide der unteren Scheiben (13) der beiden Hubmasten (9, 10) jeweils mit der Antriebswelle (15) einer Antriebseinrichtung (18) drehfest verbunden sind.

6. Flurförderzeug nach einem der Ansprüche 1 bis 5, **dadurch gekennzeichnet, dass** jedes flexible Zugmittel (12) zwei parallel verlaufende Keilriemen umfasst und die Scheiben (13, 14) als Doppelriemenscheiben ausgebildet sind.

7. Flurförderzeug nach einem der Ansprüche 1 bis 6, **dadurch gekennzeichnet, dass** jeder der Hubmasten (9, 10) einen ersten Hauptrahmen (43) umfasst, an dem wahlweise zumindest ein zweiter Hauptrahmen (51) anbringbar ist.

8. Flurförderzeug nach Anspruch 7, **dadurch gekennzeichnet, dass** der erste Hauptrahmen (43) eine obere Querstrebe (48) und der zweite Hauptrahmen (51) eine untere Querstrebe (52) aufweist, wobei die untere Querstrebe (52) an der oberen Querstrebe (48) befestigbar ausgebildet sind.

9. Flurförderzeug nach einem der Ansprüche 1 bis 8, **dadurch gekennzeichnet, dass** das Flurförderzeug (100) Fahrantriebe und Lenkmotoren umfasst, und die Fahrantriebe, die Lenkmotoren und die Antriebseinrichtungen (18) elektrisch betreibbar ausgebildet sind.

## Claims

1. An industrial truck (100),
comprising opposing masts (9, 10) for lifting and lowering a loading platform (11) located between the masts in a lifting and lowering direction (Z),
wherein each mast (9, 10) comprises two pulleys (13, 14), which are spaced apart in the lifting and lowering direction (Z), and around which a flexible pulling means (12) revolves, wherein at least one of the pulleys (13, 14) can be rotationally driven by a drive device (18), wherein at least one of the two pulleys (13, 14) of each mast (9, 10) is mounted in a bearing block (19), which, shiftable in a tensioning direction (S), is arranged in a bearing block reception (20) of the respective mast (9, 10).

2. The industrial truck according to patent claim 1, **characterized in that** the flexible pulling means (12) comprises two strands (22, 23) extending in the lifting and lowering direction.

3. The industrial truck according to patent claim 2, **characterized in that** the loading platform (11) is connected with two parallel strands (23) of the flexible pulling means (12) of the two masts (9, 10).

4. The industrial truck according to any one of patent claims 1 to 3, **characterized in that** at least one of the lower pulleys (13) of the two masts (9, 10) is non-rotatably connected with the drive shaft (17) of a drive device (18), and the two lower pulleys (13) of the two masts (9, 10) are mechanically connected with each other via a connecting shaft (24).

5. The industrial truck according to patent claim 4, **characterized in that** both lower pulleys (13) of the two masts (9, 10) each are non-rotatably connected with the drive shaft (15) of a drive device (18).

6. The industrial truck according to any one of patent claims 1 to 5, **characterized in that** each flexible pulling means (12) comprises two parallel V-belts and the pulleys (13, 14) are conceived as double belt-pulleys.

7. The industrial truck according to any one of patent claims 1 to 6, **characterized in that** each mast (9, 10) comprises a first main frame (43) to which a second main frame (51) can be optionally attached.

8. The industrial truck according to patent claim 7, **characterized in that** the first main frame (43) comprises an upper cross-bar (48) and the second main frame (51) comprises a lower cross-bar (52), wherein the lower cross-bar (52) can be fixed to the upper cross-bar (48).

9. The industrial truck according to any one of patent claims 1 to 8, **characterized in that** the industrial truck (100) comprises travel drives and steering motors and the travel drives, the steering motors and the drive devices (18) are conceived to be electrically driven.

## Revendications

1. Chariot de manutention (100),
comprenant des mâts de levage (9, 10) disposés à l'opposé les uns des autres pour le levage et l'abaissement d'une plateforme de chargement (11) située entre ceux-ci dans une direction de levage et d'abaissement (Z),
dans lequel chacun des mâts de levage (9, 10) comprend deux disques (13, 14) espacés l'un de l'autre dans la direction de levage et d'abaissement (Z), lesquels sont entourés d'un moyen de traction (12) flexible, au moins un des disques (13, 14) pouvant être entraîné en rotation au moyen d'un dispositif d'entraînement (18),
dans lequel au moins un des deux disques (13, 14) de chaque mât de levage (9, 10) est logé dans un palier (19) qui, déplaçable dans une direction de serrage (S), est agencé dans une réception de palier (20) du mât de levage (9, 10) respectif.

2. Chariot de manutention selon la revendication 1, **caractérisé en ce que** le moyen de traction (12) flexible comporte deux brins (22, 23) s'étendant dans la direction de levage et d'abaissement.

3. Chariot de manutention selon la revendication 2, **caractérisé en ce que** le plateforme de chargement (11) est relié à deux brins (22, 23) parallèles des moyens de traction (12) flexibles des deux mâts de levage (9, 10).

4. Chariot de manutention selon la revendication 1 à 3, **caractérisé en ce qu'**au moins un des disques (13) inférieurs des deux mâts de levage (9, 10) est relié de manière solidaire en rotation à l'arbre d'entraînement (17) d'un dispositif d'entraînement (18), et les deux disques (13) inférieurs des deux mâts de levage (9, 10) sont reliés mécaniquement l'un à l'autre par une arbre de liaison (24).

5. Chariot de manutention selon la revendication 4, **caractérisé en ce que** les deux disques (13) inférieurs des deux mâts de levage (9, 10) sont reliés chacun à l'arbre d'entraînement (15) d'un dispositif d'entraînement (18) de manière solidaire en rotation.

6. Chariot de manutention selon l'une quelconque des revendications 1 à 5, **caractérisé en ce que** chaque moyen de traction (12) flexible comporte deux courroies trapézoïdales s'étendant parallèlement et que les disques (13, 14) sont conçus en tant que poulies doubles.

7. Chariot de manutention selon l'une quelconque des revendications 1 à 6, **caractérisé en ce que** chacun des mâts de levage (9, 10) comporte un premier cadre principal (43) sur lequel au moins un deuxième cadre principal (51) peut être monté au choix.

8. Chariot de manutention selon la revendication 7, **caractérisé en ce que** le premier cadre principal (43) comporte une traverse supérieure (48) et le deuxième cadre principal (51) comporte une traverse inférieure (52), dans lequel la traverse inférieure (52) peut être fixée à la traverse supérieure (48).

9. Chariot de manutention selon la revendication 1 à 8, **caractérisé en ce que** le chariot de manutention (100) comporte des organes de translation et des moteurs de direction et les organes de translation, les moteurs de direction et les dispositif d'entraînement (18) sont conçus pour fonctionner électriquement.
